# EUROPEAN PATENT SPECIFICATION

(11) **EP 1 896 349 B1**
(45) Date of publication and mention of the grant of the patent: **21.10.2009**
(21) Application number: 06763897.3
(22) Date of filing: 26.06.2006
(51) Int. Cl.: B65G 47/96

(54) **SYSTEM FOR CONVEYING AND SELECTING FRUIT AND VEGETABLE PRODUCTS**
SYSTEM ZUM BEFÖRDERN UND WÄHLEN VON FRUCHT- UND GEMÜSEPRODUKTEN
SYSTÈME DE TRANSPORT ET DE SÉLECTION POUR FRUITS ET LÉGUMES

(30) Priority: 28.06.2005 IT BO20050425
(43) Date of publication of application: 12.03.2008
(73) Proprietor: Unitec S.p.A., 48022 Lugo (IT)
(72) Inventor: BENEDETTI, Angelo, I-48020 Savarna (IT)
(74) Representative: Jorio, Paolo
(86) International application number: PCT/EP2006/063562
(87) International publication number: WO 2007/000440

(56) References cited:
- FR-A- 2 777 809
- US-A- 5 477 955
- US-A- 5 489 017
- PATENT ABSTRACTS OF JAPAN vol. 2003, no. 08, 6 August 2003 (2003-08-06) -& JP 2003 093977 A (KUBOTA CORP), 2 April 2003 (2003-04-02)

## Description

### TECHNICAL FIELD

The present invention relates to a system for conveying and selecting fruit and vegetable products.

### BACKGROUND ART

As known, systems of the type indicated above comprise a plurality of buckets, in each of which a fruit and vegetable product is accommodated, a conveying line of the aforesaid buckets, a member for determining certain features of the fruit and vegetable product, such as weight, size, colour, etc., a plurality of discharge and product packaging stations, and an assembly controlling the conveyance of products to the latter fruit and vegetable product stations according to the determined features. The bucket is nothing more than a container presenting a bottom wall and four preferably outwards slanted side walls. The assembly which controls the discharge of the fruit and vegetable product from the bucket comprises an actuator which controls the rotation of the bucket about a horizontal axis so that the fruit and vegetable product either drops and/or rolls out of its respective bucket.

The US-Patent 5,477,955 discloses a system for conveying and selecting fruit and vegetable products according to the preamble of claim 1.

One of the main problems of the above described system is that such a system for discharge the fruit and vegetable product from the bucket may prejudice the product integrity; consider for example product in bunches, such as certain type of tomatoes or grapes, or products with delicate skins. It is apparent that in the discharge system described above the quantity of fruit and vegetable products which must be discarded because damaged by dropping from the bucket onto the conveying belt of the discharge station is high.

### DISCLOSURE OF INVENTION

It is the object of the present invention to make a system for conveying and selecting fruit and vegetable products which envisages the transfer of the fruit and vegetable product from the bucket to the discharge and packaging station so as not to prejudice the integrity of the product itself.

This object is achieved by the system of claim 1.

### BRIEF DESCRIPTION OF THE DRAWINGS

The present invention will now be described with reference to the accompanying drawings illustrating a preferred embodiment thereof, in which:
figure 1 is a perspective view of a system made according to the dictates of the present invention;

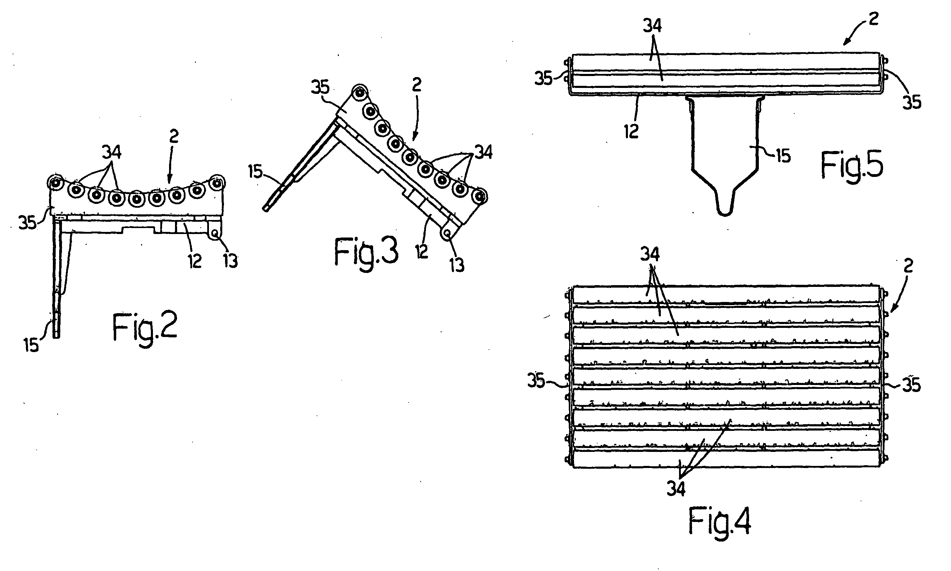

figure 2 is a side view of a container of the system in figure 1;
figure 3 is a side view of the container in figure 2 in a different working position;
figure 4 is a plan view of the container in figure 2; and
figure 5 is a frontal view of the container in figure 2.

### BEST MODE FOR CARRYING OUT THE INVENTION

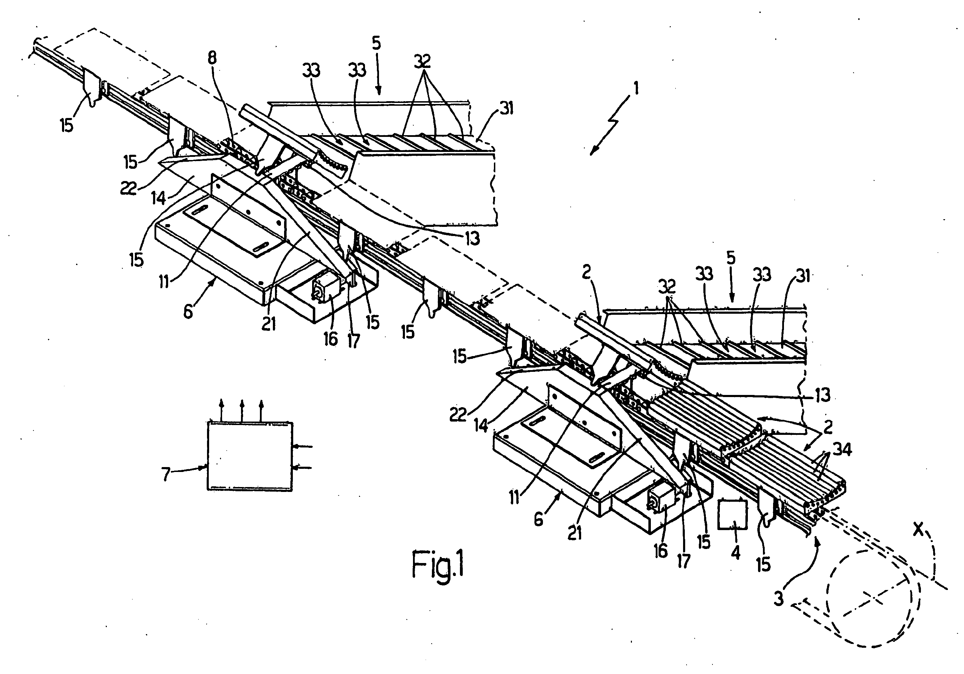

With reference to figure 1, it is indicated by 1 a system for conveying and selecting fruit and vegetable products comprising:
a plurality of buckets 2 within which is placed a fruit and vegetable product in a station (not shown);
a conveying line 3 of aforesaid buckets 2 along a horizontal axis X;
means 4 (of the known type and for this not shown) for determining at least one feature of the fruit and vegetable product accommodated in the buckets 2;
a plurality of discharge and packaging stations 5 of the known type arranged by aforesaid conveying line 3;
an assembly 6 for each aforesaid station 5 for controlling the rotation about an axis parallel to axes X of the bucket 2 between a conveying position and a discharge position of the product towards one predetermined of the aforesaid stations 5; and
an electronic control unit 7 for managing the conveying line 3, the means 4, the stations 5 and the assembly 6.

The conveying line 3 is of the known type and in particular presents a mobile chain 8 along a loop route. The conveying line 3 supports, according to a uniform distribution, a plurality of brackets 11 which support a respective plate 12. In particular, each plate 12 is hinged to the respective bracket 11 so that it can turn about a horizontal pin 13 from a conveying position in which it is horizontal to a discharge position in which it is slanted by a predetermined angle. The hinging pin 13 is arranged on the side of the line 3 facing stations 5. Each plate 12 integrally supports a respective bucket 2.

The assembly 6 is of the known type and in particular shown in patent application BO2003A00280 by the same applicant. In all cases, the assembly 6 comprises a cam plate 14 installed by the side of the line 3 at each station 5 on the opposite side, a tappet profile 15 which extends downwards from a corresponding plate 12, and an actuator 16 arranged near each cam plate 14. The actuator 16 comprises a horizontal stem 17 mobile between an extracted position in which it does not interact with the tappet profile 15 whereby the plate 12 and its tappet profile 15 remain in the conveying position and a retracted position in which, by means of a body 18, the stem 17 presses the tappet profile 15 against the cam plate 14 determining a rotation about the pin 13 of the plate 12 in contact between the tappet profile 15 and an upward ramp 21 defined on the cam plate 14. Now, such contact increases the rotation of the plate 12 and its bucket 2, favouring the release of the product from the bucket 2. Of course, the cam plate 14 presents in sequence a downward ramp 22 which makes the plate 12 return to its horizontal conveying position.

With reference to figure 1, station 5 comprises a conveyor belt 31 and respective handling means managed by unit 7 and not shown being of the known type. The conveyor belt 31 presents, for its entire length, a plurality of appendixes 32 which define therebetween a plurality of seats 33 in which the fruit and vegetable product is discharged from the bucket 2.

With reference to figures from 3 to 5, bucket 2 is defined by a plurality of rollers 34 carried by two side fins 35 which extend upwards from plate 12. The rollers 34 are parallel to axis X, are idly mounted and define an upward concave resting surface of the fruit and vegetable product.

In use, one or more of the features of the fruit and vegetable product conveyed by each bucket 2 are determined by means 4; features such as weight, size, colour, etc. On the basis of such features, unit 7 selects the station 5 where to discharge the fruit and vegetable product. Now, each passage of the bucket 2 at the selected station 5, the unit 7 activates the assembly 6 which controls the rotation of a predetermined angle (according to the dimensions in height of the cam plate 14) of the bucket 2. The fruit and vegetable product from the bucket 2 slips essentially parallelly to itself into a seat 33 of the belt 31. Such slipping occurs smoothly by effect of the rotation of the rollers 34 impressed by the fruit and vegetable product itself.

The unit 7 according to the features of fruit and vegetable product conveyed by buckets 2 may carry out different operating modes. A first mode may envisage discharge into a seat 33 of only the fruit and vegetable products presenting a predetermined grade (or colour, or size) to reach a certain total weight or number of products. A second mode may envisage discharge into a seat 33 of the fruit and vegetable products also of different grade (or colour, or size) to reach a determined total weight or number of products. Once the total weight or selected number of products in the seat 33 is reached, the latter is advanced to a packaging member of the known type and for this reason not shown, thus taking a new seat 33 at the line 3.

According to the above, the advantages obtained by implementing the present invention are apparent and numerous.

In particular, it has been carried out a system which allows the fruit and vegetable product to be conveyed from the conveying buckets to the discharge and packaging station by slipping and not by dropping or rolling. This type of transfer prevents collisions between the various parts of bunches of product and the collision of the product onto the discharge station conveyor belt. Essentially, with this type of smooth transfer, the integrity of the product is safeguarded and thus rejects of the same are considerably reduced. It is apparent that this positively influences product cost. It must be underlined that smooth transfer is obtained with a bucket which is easy to construct and to assemble. Furthermore, considering that a gap is determined between the various adjacent rollers, possible imparities may drop down through such gaps and therefore not channel towards the packaging system.

It is finally apparent that changes and variants can be made to the system 1 here described and shown without however departing from the protective scope of the present invention, which is defined by the appended claims.

In particular, the bucket 2 may envisage only a reduced portion defined by the rollers 34. furthermore, at least one roller 34 may be driven and therefore help the slipping of the product towards the belt 31.

## Claims

1. A system for conveying and selecting fruit and vegetable products, comprising:
a plurality of buckets (2) presenting a resting surface of a fruit and vegetable product;
a conveying line (3) of said buckets (2) along a horizontal axis (X);
at least one discharge station (5) arranged by the side of said conveying line (3);
an assembly (6) for controlling the rotation of said bucket (2) between a conveying position and a discharge position of the product towards said station (5);
wherein said resting surface of said bucket (2) is upwardly concave, and at least one part of the resting surface of said bucket (2) is defined by a plurality of rollers (34) turning about their longitudinal axis; **characterised in that** said rollers (34) are parallel to said horizontal axis (X) of said conveying line (3).

2. A system according to claim 1, **characterised in that** at least one of said rollers (34) is driven.

3. A system according to at least one of the preceding claims, **characterised in that** it comprises means (4) for determining at least one feature of the fruit and vegetable product accommodated in said buckets (2), a plurality of said stations (5), said assembly (6) for each of said stations (5), and an electronic control unit (7) of said conveying line (3), of said means (4), of said stations (5), and of said assembly (6) so that, by means of the determination made by said means (4) for a certain bucket (2), the transfer of the product from this bucket (2) to a predetermined station (5) is controlled.

4. A system according to claim 3, **characterised in that** said station (5) comprises a conveyor belt (31) on whose surface are obtained seats (33) in which the product of said bucket (2) is transferred.

## Patentansprüche

1. System zum Fördern und Auswählen von Obst- und Gemüseerzeugnissen, umfassend:
eine Mehrzahl von Bechern (2), die eine Ablageoberfläche für ein Obst- und Gemüseerzeugnis bereitstellen;
eine Förderbahn (3) der Becher (2) entlang einer horizontalen Achse (X);
wenigstens eine Abgabestation (5), die an der Seite der Förderbahn (3) angeordnet ist;
eine Anordnung (6) zum Steuern bzw. Regeln der Drehung des Bechers (2) zwischen einer Förderposition und einer Abgabeposition des Erzeugnisses hin zu der Station (5);
wobei die Ablageoberfläche des Bechers (2) nach oben konkav ist und wenigstens ein Teil der Ablageoberfläche des Bechers (2) von einer Mehrzahl von sich um ihre Längsachse drehenden Rollen (34) festgelegt ist;
**dadurch gekennzeichnet, dass**
die Rollen (34) parallel zu der horizontalen Achse (X) der Förderbahn (3) sind.

2. System nach Anspruch 1, **dadurch gekennzeichnet, dass** wenigstens eine der Rollen (34) angetrieben ist.

3. System nach wenigstens einem der vorhergehenden Ansprüche, **dadurch gekennzeichnet, dass** es Mittel (4) zum Bestimmen wenigstens einer Eigenschaft des in den Bechern (2) aufgenommenen Obst- und Gemüseerzeugnisses, eine Mehrzahl der Stationen (5), die Anordnung (6) für jede der Stationen (5) und eine elektronische Steuer- bzw. Regeleinheit (7) der Förderbahn (3), der Mittel (4), der Stationen (5) und der Anordnung (6) umfasst, damit mittels der von den Mitteln (4) für einen bestimmten Becher (2) durchgeführten Bestimmung der Transport des Erzeugnisses von diesem Becher (2) zu einer vorbestimmten Station (5) gesteuert bzw. geregelt wird.

4. System nach Anspruch 3, **dadurch gekennzeichnet, dass** die Station (5) ein Förderband (31) umfasst, an dessen Oberfläche Mulden (33) vorhanden sind, in denen das Erzeugnis des Bechers (2) transportiert wird.

## Revendications

1. Système de transport et de sélection de produits fruitiers et végétaux, comprenant :
une pluralité de godets (2) présentant une surface de support d'un produit fruitier et végétal ;
une ligne de transport (3) desdits godets (2) le long d'un axe horizontal (X) ;
au moins un poste de déchargement (5) agencé à côté de ladite ligne de transport (3) ;
un ensemble (6) pour commander la rotation dudit godet (2) entre une position de transport et une position de déchargement du produit vers ledit poste (5) ;
dans lequel ladite surface de support dudit godet (2) est concave vers le haut, et au moins une partie de la surface de support dudit godet (2) est définie par une pluralité de rouleaux (34) tournant autour de leur axe longitudinal ; **caractérisé en ce que** lesdits rouleaux (34) sont parallèles audit axe horizontal (X) de ladite ligne de transport (3).

2. Système selon la revendication 1, **caractérisé en ce qu'**au moins l'un desdits rouleaux (34) est entraîné.

3. Système selon au moins l'une des revendications précédentes, **caractérisé en ce qu'**il comprend des moyens (4) pour déterminer au moins une caractéristique du produit fruitier et végétal logé dans lesdits godets (2), une pluralité desdits postes (5), ledit ensemble (6) pour chacun desdits postes (5), et une unité de commande électronique (7) de ladite ligne de transport (3), desdits moyens (4), desdits postes (5) et dudit ensemble (6) de sorte que, au moyen de la détermination effectuées par lesdits moyens (4) pour un certain godet (2), le transfert du produit de ce godet (2) à un poste (5) prédéterminé soit commandé.

4. Système selon la revendication 3, **caractérisé en ce que** ledit poste (5) comprend une courroie de transport (31) sur la surface de laquelle des sièges (33) sont obtenus dans lesquels le produit dudit godet (2) est transféré.
